(19) Europäisches Patentamt
European Patent Office
Office européen des brevets

(11) **EP 4 582 841 A1**

(12) **EUROPEAN PATENT APPLICATION**
published in accordance with Art. 153(4) EPC

(43) Date of publication:
**09.07.2025 Bulletin 2025/28**

(21) Application number: **23859887.4**

(22) Date of filing: **21.07.2023**

(51) International Patent Classification (IPC):
**G02B 6/036** (2006.01)

(52) Cooperative Patent Classification (CPC):
**G02B 6/036**

(86) International application number:
**PCT/JP2023/026794**

(87) International publication number:
**WO 2024/048118 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.09.2022 JP 2022140078**

(71) Applicant: SUMITOMO ELECTRIC INDUSTRIES,
LTD.
Osaka-shi, Osaka 541-0041 (JP)

(72) Inventors:
• **MORIOKA, Ryota**
Osaka-shi, Osaka 541-0041 (JP)
• **YAMAMOTO, Yoshinori**
Osaka-shi, Osaka 541-0041 (JP)
• **KAWAGUCHI, Yuki**
Osaka-shi, Osaka 541-0041 (JP)
• **MORITA, Keisei**
Osaka-shi, Osaka 541-0041 (JP)

(74) Representative: **TBK**
Bavariaring 4-6
80336 München (DE)

(54) **OPTICAL FIBER**

(57) An optical fiber includes a glass fiber including a core and a cladding. The cladding includes an inner cladding surrounding the core, a trench surrounding the inner cladding, and an outer cladding surrounding the trench. An average value of a refractive index of the core is larger than an average value of a refractive index of the inner cladding and a minimum value of a refractive index of the outer cladding. An average value of a refractive index of the trench is smaller than the average value of the refractive index of the inner cladding and the minimum value of the refractive index of the outer cladding. The core contains germanium dioxide ($GeO_2$). A relative refractive index difference of the core with respect to a refractive index of pure silica glass ($SiO_2$) is 0.12% or more and 0.30% or less. A value obtained by subtracting a relative refractive index difference of the outer cladding with respect to the refractive index of pure silica glass from the relative refractive index difference of the core is 0.25% or more. A diameter of the core is 4.0 $\mu$m or more and 9.2 $\mu$m or less. A mode field diameter for light having a wavelength of 1310 nm is 8.2 $\mu$m or more and 9.6 $\mu$m or less. A zero dispersion wavelength is 1300 nm or more and 1324 nm or less. A zero dispersion slope is 0.073 ps/(nm$^2$•km) or more and 0.092 ps/(nm$^2$•km) or less. A cable cut-off wavelength is 1260 nm or less. A bending loss for light having a wavelength of 1625 nm when the optical fiber is wound around a mandrel having a diameter of 60 mm is 0.1 dB or less per 100 turns.

*Fig.1*

## Description

## Technical Field

The present disclosure relates to an optical fiber. Priority is claimed on Japanese Patent Application No. 2022-140078, filed on September 2, 2022, the entire content of which is incorporated herein by reference.

## Background Art

Patent Literature 1 discloses a structure of a single-mode optical fiber. The optical fiber includes a core layer and a cladding layer. The core layer is a silica glass layer co-doped with germanium and fluorine. A radius of the core layer is 3.0 $\mu$m to 3.9 $\mu$m. A relative refractive index difference of the core layer is -0.04% to 0.12%. The contribution of germanium doping to the relative refractive index difference of the core layer is 0.02% to 0.10%. The cladding layer include an inner cladding layer, a depressed inner cladding layer, an auxiliary outer cladding layer, and an outer cladding layer. A radius of the inner cladding layer is 8 $\mu$m to 14 $\mu$m. A relative refractive index difference of the inner cladding layer is -0.35% to -0.10%. A radius of the depressed inner cladding layer is 14 $\mu$m to 20 $\mu$m. A relative refractive index difference of the depressed inner cladding layer is -0.6% to -0.2%. A radius of the auxiliary outer cladding layer is 35 $\mu$m to 50 $\mu$m. A relative refractive index difference of the auxiliary outer cladding layer is -0.4% to -0.15%.

Patent Literature 2 discloses a structure of an optical fiber. The optical fiber includes a core and a cladding having a refractive index lower than the refractive index of the core. The cladding contains fluorine (F). The fluorine concentration in the cladding is adjusted to be minimized at an outermost portion of the cladding.

## Citation List

## Patent Literature

Patent Literature 1: Japanese Unexamined Patent Publication No. 2018-511077
Patent Literature 2: PCT International Publication No. WO 2020/013297

## Summary of Invention

## Technical Problem

In order to extend the transmission distance and increase the transmission capacity in an optical fiber transmission system, it is desirable that the transmission loss of an optical fiber is small. As optical fibers that realize low transmission loss, there exist an optical fiber using pure silica glass for a core and an optical fiber in which a core is doped with an alkali element. From the viewpoint of suppressing the manufacturing cost to a level lower than those of these optical fibers, there exists an optical fiber in which a core is doped with germanium dioxide ($GeO_2$).

In an optical fiber for communication, in order to transmit an optical signal over a long distance, reducing transmission loss and bending loss, namely, satisfying standards related to transmission loss and bending loss (for example, ITU-T G.652.B or G.652.D) is required.

In an optical fiber in which a core is doped with germanium dioxide ($GeO_2$), the smaller the relative refractive index difference of the core with respect to the refractive index of pure silica glass is (in other words, the lower the concentration of $GeO_2$ is), the higher the viscosity of the core becomes. When an optical fiber is manufactured, an optical fiber preform is drawn while applying tension thereto. Internal stress remains in the optical fiber extracted by drawing. When the viscosity of the core is larger than the viscosity of a cladding, tensile stress remains in the core. When excessive tensile stress remains in the core through which most of signal light is guided, the core is pulled, so that glass structural defects increase and transmission loss increases. The smaller the relative refractive index difference of the core is, the smaller the refractive index difference between the core and the cladding becomes. As a result, the action of confining the light, which propagates through the core, in the core is weakened, so that bending loss increases. Furthermore, the fundamental mode becomes less likely to be confined in the core, and the fundamental mode is cut off, which is a risk. For example, in the configuration described in Patent Literature 2, the relative refractive index difference of the core layer is -0.04% to 0.12%. In such a configuration, it is considered that the relative refractive index difference of the core layer is too small, and there is a concern about an increase in transmission loss and bending loss. In the optical fiber in which the core is doped with germanium dioxide ($GeO_2$), the larger the relative refractive index difference of the core is (in other words, the higher the concentration of $GeO_2$ in the core is), the more Rayleigh scattering caused by fluctuations in the concentration of $GeO_2$ increases, and transmission loss increases.

An object of the present disclosure is to reduce bending loss and transmission loss in an optical fiber in which a core is doped with $GeO_2$.

## Solution to Problem

An optical fiber according to one aspect of the present disclosure includes a glass fiber including a core and a cladding. The cladding includes an inner cladding surrounding the core, a trench surrounding the inner cladding, and an outer cladding surrounding the trench. An average value of a refractive index of the inner cladding and a minimum value of a refractive index of the outer cladding are smaller than an average value of a refractive index of the core. An average value of a refractive index of the trench is smaller than the average value of the refractive index of the inner cladding and the minimum value of the refractive index of the outer cladding. The core contains germanium dioxide. A relative refractive index difference of the core with respect to a refractive index of pure silica glass is 0.12% or more and 0.30% or less. A diameter of the core is 4.0 $\mu$m or more and 9.2 $\mu$m or less. A mode field diameter for light having a wavelength of 1310 nm is 8.2 $\mu$m or more and 9.6 $\mu$m or less. A zero dispersion wavelength is 1300 nm or more and 1324 nm or less. A zero dispersion slope is 0.073 ps/(nm$^2$•km) or more and 0.092 ps/(nm$^2$•km) or less. A cable cut-off wavelength is 1260 nm or less. A bending loss for light having a wavelength of 1625 nm when the optical fiber is wound around a mandrel having a diameter of 60 mm is 0.1 dB or less per 100 turns.

**Advantageous Effects of Invention**

According to the present disclosure, it is possible to reduce bending loss and transmission loss in the optical fiber in which the core is doped with GeO$_2$.

**Brief Description of Drawings**

[FIG. 1] FIG. 1 is a view showing a cross section perpendicular to an axial direction of an optical fiber according to one embodiment.
[FIG. 2] FIG. 2 is a view showing a refractive index distribution of a glass fiber in a radial direction.
[FIG. 3] FIG. 3 is a graph showing a relationship between a relative refractive index difference of a core and a predicted transmission loss (dB/km) for light having a wavelength of 1550 nm.
[FIG. 4] FIG. 4 is a table showing six examples and one comparative example of the optical fiber.
[FIG. 5] FIG. 5 is a table showing the six examples and the one comparative example of the optical fiber.
[FIG. 6] FIG. 6 is a table showing a relationship between relative refractive index differences and an average residual stress of the core in five samples of the optical fiber.
[FIG. 7] FIG. 7 is a graph showing the distribution of the relative refractive index differences of the five samples in FIG. 6 in the radial direction.

**Description of Embodiments**

[Description of embodiment of present disclosure]

Initially, the contents of an embodiment of the present disclosure will be listed and described.

[1] An optical fiber according to one aspect of the present disclosure includes a glass fiber including a core and a cladding. The cladding includes an inner cladding surrounding the core, a trench surrounding the inner cladding, and an outer cladding surrounding the trench. An average value of a refractive index of the core is larger than an average value of a refractive index of the inner cladding and a minimum value of a refractive index of the outer cladding. An average value of a refractive index of the trench is smaller than the average value of the refractive index of the inner cladding and the minimum value of the refractive index of the outer cladding. The core contains germanium dioxide. A relative refractive index difference of the core with respect to a refractive index of pure silica glass is 0.12% or more and 0.30% or less. A value obtained by subtracting a relative refractive index difference of the outer cladding with respect to the refractive index of pure silica glass from the relative refractive index difference of the core is 0.25% or more. A radius of the core is 4.0 $\mu$m or more and 9.2 $\mu$m or less. A mode field diameter for light having a wavelength of 1310 nm is 8.2 $\mu$m or more and 9.6 $\mu$m or less. A zero dispersion wavelength is 1300 nm or more and 1324 nm or less. A zero dispersion slope is 0.073 ps/(nm$^2$•km) or more and 0.092 ps/(nm$^2$•km) or less. A cable cut-off wavelength is 1260 nm or less. A bending loss for light having a wavelength of 1625 nm when the optical fiber is wound around a mandrel having a diameter of 60 mm is 0.1 dB or less per 100 turns. According to the optical fiber having these parameters, the relative refractive index difference of the core doped with GeO$_2$ can be kept within an appropriate range, and bending loss and transmission loss can be reduced to a level that complies with G.652.D.

[2] In the optical fiber according to [1] above, a relative refractive index difference of the inner cladding with respect to the refractive index of pure silica glass may be -0.12% or more and 0.10% or less. A relative refractive index difference of the trench with respect to the refractive index of pure silica glass may be -0.70% or more and -0.20% or less. Furthermore, when a radius of an outer circumferential circle of the core is r1, a radius of an outer circumferential circle of the inner cladding is r2, and a radius of an outer circumferential circle of the trench is r3, r2/r1 may be 2.2 or more and 3.8 or less, and r3 - r2 may be 4 $\mu$m or more and 15 $\mu$m or less. In this case, the optical fiber can have a refractive index distribution structure to comply with G.652.D.

[3] In the optical fiber according to [1] or [2] above, a bending loss for light having a wavelength of 1550 nm when the optical fiber is wound around a mandrel having a diameter of 20 mm may be 0.75 dB or less per turn. A bending loss for light having a wavelength of 1625 nm when the optical fiber is wound around a mandrel having a diameter of 20 mm may be 1.5 dB or less per turn. A bending loss for light having a wavelength of 1550 nm when the optical fiber is wound around a mandrel having a diameter of 30 mm may be 0.25 dB or less per 10 turns. A bending loss for light having a wavelength of 1625 nm when the optical fiber is wound around a mandrel having a diameter of 30 mm may be 1.0 dB or less per 10 turns. In this case, the optical fiber can comply with G.652.D and G.657.A1 that is a standard related to bending loss.

[4] In the optical fiber according to any one of [1] to [3] above, the outer cladding may be made of only pure silica glass. In this case, since tensile stress is concentrated in the outer cladding, tensile stress is suppressed from remaining in the core, and transmission loss can be reduced.

[5] In the optical fiber according to any one of [1] to [3] above, the outer cladding may contain fluorine. In this case, since the refractive index difference between the core and the outer cladding becomes large, even when the relative refractive index difference of the core is made small, fundamental mode cutoff is less likely to occur.

[6] In a fluorine concentration distribution in the outer cladding of the optical fiber according to [5] above, when the outer cladding is divided into a first region including an outer peripheral surface of the outer cladding and a second region located inside the first region, an average value of a fluorine concentration in the first region may be smaller than an average value of a fluorine concentration in the second region. In this case, since tensile stress is concentrated in the vicinity of the outer peripheral surface of the outer cladding, compressive stress remains in the core, or even when tensile stress remains in the core, the tensile stress can be reduced. Therefore, transmission loss can be reduced.

[7] In the optical fiber according to any one of [1] to [6] above, an average stress remaining in the core may be a compressive stress, or a tensile stress of 30 MPa or less. In this case, since glass structural defects occurring in the core due to excessive tensile stress can be reduced, an increase in transmission loss due to glass structural defects can be reduced.

[8] In the optical fiber according to any one of [1] to [7] above, the core may not substantially contain an alkali element. In this case, the manufacturing cost of the optical fiber can be reduced.

[9] In the optical fiber according to any one of [1] to [8] above, a bending loss for light having a wavelength of 1625 nm when the optical fiber is wound around a mandrel having a diameter of 100 mm may be $1.0 \times 10^{-5}$ dB or less per turn. In this case, leakage loss due to the fundamental mode cutoff can be reduced. Incidentally, when it is difficult to actually measure the bending loss, the bending loss may be obtained by performing extrapolation based on the dependency of the bending loss on the bending radius.

[10] In the optical fiber according to any one of [1] to [9] above, the core may contain fluorine, and a relative refractive index difference attributed to fluorine in the core with respect to a refractive index of pure silica glass is -0.12% or more and less than 0%. In this case, the core co-doped with $GeO_2$ and fluorine. Accordingly, as compared to when no fluorine is contained, even when the relative refractive index difference of the core is the same, the viscosity of the core can be lowered. Therefore, the residual stress in the core can be easily made into compressive stress. In addition, an increase in transmission loss attributed to fluorine can be suppressed by setting the fluorine concentration in the core not to be too high.

[Details of embodiment of present disclosure]

Specific examples of an optical fiber according to the present embodiment will be described with reference to the drawings as necessary. The present invention is not limited to these examples and is defined by the claims, and it is intended that the present invention includes all modifications within the concept and scope of the claims and their equivalents. In the following description, the same elements in the description of the drawings are denoted by the same reference signs, and duplicate descriptions will be omitted. In the following description, an "outer diameter" of a certain element refers to the average value of the outer diameter of the element at each axial position of the optical fiber. A "thickness" of a certain element refers to the average value of the thickness of the element at each axial position of the optical fiber.

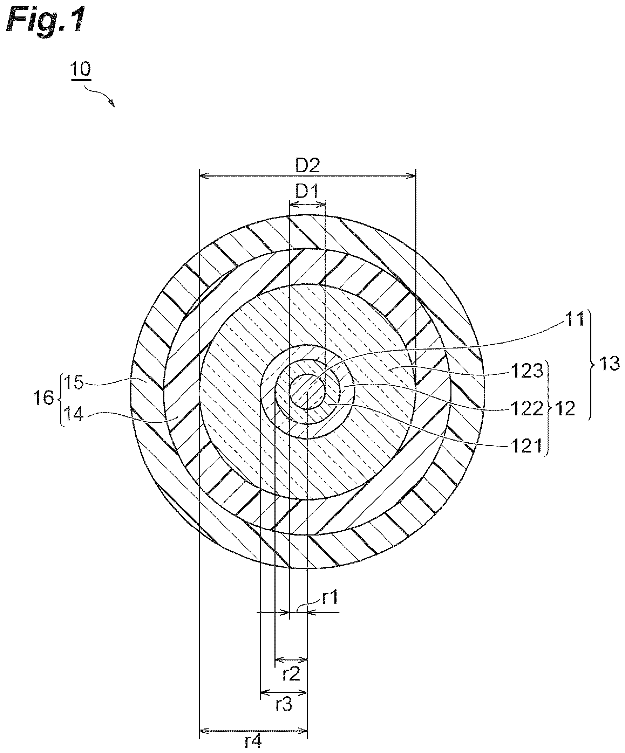

FIG. 1 is a view showing a cross section perpendicular to an axial direction of an optical fiber 10 according to one embodiment. The optical fiber 10 is a so-called optical fiber strand, and complies with both the ITU-T G.652.D standard and the ITU-T G.657.A standard. The optical fiber 10 includes a glass fiber 13 including a core 11 and a cladding 12, and a resin layer 16 provided on an outer periphery of the glass fiber 13. The resin layer 16 includes a primary resin layer 14 surrounding the glass fiber 13, and a secondary resin layer 15 surrounding the primary resin layer 14.

The cladding 12 surrounds the core 11. The cladding 12 includes an inner cladding 121, a trench 122, and an outer cladding 123. The inner cladding 121 surrounds the core 11, and is in contact with an outer peripheral surface of the core 11. The trench 122 surrounds the inner cladding 121, and is in contact with an outer peripheral surface of the inner cladding 121. The outer cladding 123 surrounds the trench 122, and is in contact with an outer peripheral surface of the trench 122.

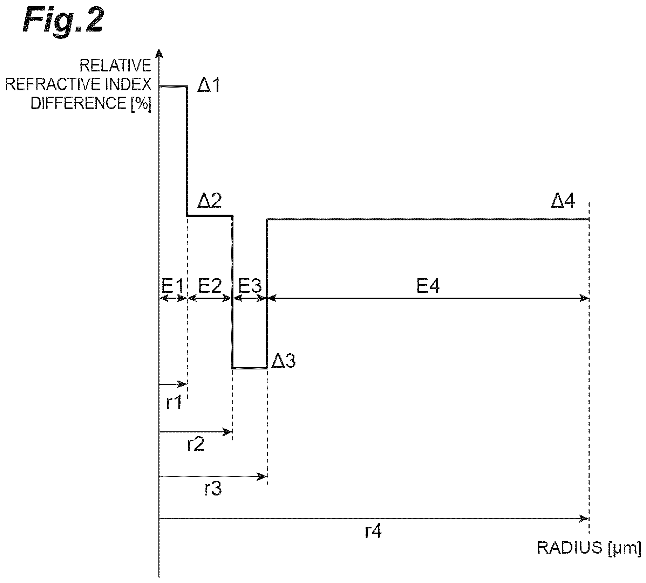

FIG. 2 is a view showing a refractive index distribution of the glass fiber 13 in a radial direction. In FIG. 2, a range E1 corresponds to the core 11, a range E2 corresponds to the inner cladding 121, a range E3 corresponds to the trench 122, and a range E4 corresponds to the outer cladding 123. The vertical axis represents the relative refractive index difference, and the horizontal axis represents the radial position. As shown in FIG. 2, in the glass fiber 13, the relative refractive index differences of the core 11, the inner cladding 121, the trench 122, and the outer cladding 123 with respect to the refractive index of pure silica glass ($SiO_2$ and also referred to as pure quartz) are $\Delta1$, $\Delta2$, $\Delta3$, and $\Delta4$, respectively. $\Delta1$, $\Delta2$, $\Delta3$, and $\Delta4$ are numerical values (unit: %) represented by the following equations.

$$\Delta1 = 100 \cdot (n_{1ave} - n_0)/n_{1ave}$$

$$\Delta2 = 100 \cdot (n_{2ave} - n_0)/n_{2ave}$$

$$\Delta3 = 100 \cdot (n_{3ave} - n_0)/n_{3ave}$$

$$\Delta4 = 100 \cdot (n_{4min} - n_0)/n_{4min}$$

Here, $n_0$ is the refractive index of pure silica glass, $n_{1ave}$ is the average value of the refractive index of the core 11, $n_{2ave}$ is the average value of the refractive index of the inner cladding 121, $n_{3ave}$ is the average value of the refractive index of the trench 122, and $n_{4min}$ is the minimum value of the refractive index of the outer cladding 123.

The relative refractive index difference $\Delta1$ of the core 11 is larger than the relative refractive index difference $\Delta2$ of the inner cladding 121, the relative refractive index difference $\Delta3$ of the trench 122, and the relative refractive index difference $\Delta4$ of the outer cladding 123. In other words, the average refractive index $n_{1ave}$ of the core 11 is larger than the average refractive index $n_{2ave}$ of the inner cladding 121, the average refractive index $n_{3ave}$ of the trench 122, and the minimum refractive index $n_{4min}$ of the outer cladding 123. The relative refractive index difference $\Delta3$ of the trench 122 is smaller than the relative refractive index difference $\Delta1$ of the core 11, the relative refractive index difference $\Delta2$ of the inner cladding 121, and the relative refractive index difference $\Delta4$ of the outer cladding 123. In other words, the average refractive index $n_{3ave}$ of the trench 122 is smaller than the average refractive index $n_{1ave}$ of the core 11, the average refractive index $n_{2ave}$ of the inner cladding 121, and the minimum refractive index $n_{4min}$ of the outer cladding 123. The relative refractive index difference $\Delta2$ of the inner cladding 121 may be the same as the relative refractive index difference $\Delta4$ of the outer cladding 123, may be larger than the relative refractive index difference $\Delta4$, or may be smaller than the relative refractive index difference $\Delta4$. In other words, the average refractive index $n_{2ave}$ of the inner cladding 121 may be the same as the minimum refractive index $n_{4min}$ of the outer cladding 123, may be smaller than the minimum refractive index $n_{4min}$, or may

be larger than the minimum refractive index $n_{4min}$. The sign of the relative refractive index difference $\Delta3$ of the trench 122 is negative, and the sign of the relative refractive index difference $\Delta1$ of the core 11 is positive. A negative sign for the relative refractive index difference means that the average refractive index is smaller than the refractive index of pure silica glass. A positive sign for the relative refractive index difference means that the average refractive index is larger than the refractive index of pure silica glass.

The relative refractive index difference $\Delta1$ of the core 11 is 0.12% or more and 0.30% or less. The relative refractive index difference $\Delta2$ of the inner cladding 121 is, for example, -0.12% or more and 0.10% or less. A value ($\Delta1 - \Delta2$) obtained by subtracting the relative refractive index difference $\Delta2$ of the inner cladding 121 from the relative refractive index difference $\Delta1$ of the core 11 is, for example, 0.15% or more and 0.40% or less. In one embodiment, the value ($\Delta1 - \Delta2$) is 0.34%. Since the value ($\Delta1 - \Delta2$) is relatively small in this way, the mode field diameter of the optical fiber 10 is increased. The relative refractive index difference $\Delta3$ of the trench 122 is, for example, -0.70% or more and -0.20% or less. Since the relative refractive index difference $\Delta3$ of the trench 122 is within such a range, there is no need to extremely increase the amount of fluorine doping in the step of sintering the glass. The relative refractive index difference $\Delta3$ of the trench 122 may be less than -0.25%. A value ($\Delta1 - \Delta4$) obtained by subtracting the relative refractive index difference $\Delta4$ of the outer cladding 123 from the relative refractive index difference $\Delta1$ of the core 11 is 0.25% or more and 0.70% or less. When the relative refractive index difference $\Delta1$ of the core 11 is smaller than 0.25%, the relative refractive index difference $\Delta4$ may be made a negative value by doping the outer cladding 123 with fluorine (F). The higher the concentration of fluorine (F) is, the lower the relative refractive index difference $\Delta4$ of the outer cladding 123 can be (the larger the absolute value can be).

As shown in FIGS. 1 and 2, the radius of the outer circumferential circle of the core 11 is r1, the radius of the outer circumferential circle of the inner cladding 121 is r2, the radius of the outer circumferential circle of the trench 122 is r3, and the radius of the outer circumferential circle of the outer cladding 123 is r4. The radius r1 of the core 11 is, for example, 2.0 $\mu$m or more and 4.6 $\mu$m or less. A value (r2/r1) obtained by dividing the radius r2 of the inner cladding 121 by the radius r1 of the core 11 is, for example, 2.2 or more and 3.8 or less. A value (r3 - r2) obtained by subtracting the radius r2 of the inner cladding 121 from the radius r3 of the trench 122 is 4 $\mu$m or more and 15 $\mu$m or less. In one embodiment, the value (r3 - r2) is 6.0 $\mu$m. In one embodiment, the radius r1 of the core 11 is 3.8 $\mu$m, the radius r2 of the inner cladding 121 is 10.65 $\mu$m, and the radius r3 of the trench 122 is 16.65 $\mu$m.

A diameter D1 of the core 11 is, for example, 4.0 $\mu$m or more and 9.2 $\mu$m or less. An outer diameter D2 of the glass fiber 13, namely, an outer diameter of the cladding 12 is, for example, 125 $\mu$m $\pm$ 0.7 $\mu$m, namely, 124.3 $\mu$m or more and 125.7 $\mu$m or less. By setting the outer diameter D2 of the glass fiber 13 to be the same as an outer diameter of a typical glass fiber in this way, typical peripheral jigs such as a connector and peripheral devices such as a fusion splicer can be used, and the optical fiber 10 can be easily replaced with an existing optical fiber. For example, the optical fiber 10 can be easily applied to microduct cables, ultra-multicore cables for data centers, various other cables, and the like.

The core 11 and the cladding 12 mainly contain silica glass (quartz glass). The core 11 is made of, for example, silica glass containing germanium dioxide (GeO$_2$) as a dopant material. The optical transmission loss of the optical fiber 10 is reduced by doping the material constituting the core 11 with germanium dioxide. The silica glass in the core 11 may further contain fluorine (F) as a dopant material. A relative refractive index difference attributed to fluorine, which is a portion of the relative refractive index difference $\Delta$1 of the core 11, is, for example, -0.12% or more and less than 0%. When the material constituting the core 11 is co-doped with germanium dioxide and fluorine, the stress remaining in the core 11 is likely to become compressive stress. The concentration of fluorine contained in the core 11 is, for example, 200 ppm or more. Accordingly, the stress remaining in the core 11 is likely to become compressive stress. A fluorine concentration of 200 ppm corresponds to -0.007% when converted to the relative refractive index difference. The average stress remaining in the core 11 is a compressive stress, or a tensile stress of 30 MPa or less. The residual stress of the core 11 is measured, for example, using IFA-100 (manufactured by Interfiber Analysis, Inc., USA).

The core 11 substantially does not contain alkali elements such as lithium (Li), sodium (Na), or potassium (K). In other words, an average alkali element mass concentration in the core 11 is substantially zero. In this specification, "substantially zero" specifically refers to 50 ppm or less.

The inner cladding 121 mainly contains silica glass, and contains, for example, chlorine (Cl) as a dopant material. An average chlorine mass concentration in the inner cladding 121 is, for example, 500 ppm or more and 5000 ppm or less or 500 ppm or more and 3000 ppm or less. The trench 122 mainly contains silica glass, and contains, for example, fluorine (F) as a dopant material. The outer cladding 123 is made of pure silica glass. Pure silica glass refers to silica glass that substantially does not contain impurities (made of pure silica). Alternatively, the outer cladding 123 may mainly contain silica glass, and may contain, for example, fluorine (F) as a dopant material. A relative refractive index difference attributed to fluorine, which is a portion of the relative refractive index difference $\Delta$4 of the outer cladding 123, is, for example, -0.40% or more and less than 0%.

In the optical fiber 10, the mode field diameter for light having a wavelength of 1310 nm has a center value of 8.6 $\mu$m to 9.2 $\mu$m with an error of $\pm$ 0.4 $\mu$m. Namely, the mode field diameter is 8.2 $\mu$m or more and 9.6 $\mu$m or less. The mode field diameter is defined by Petermann-II. The bending loss of the optical fiber 10 for light having a wavelength of 1550 nm when the optical fiber 10 is wound around a mandrel having a diameter of 20 mm is 0.75 dB or less per turn. The bending loss of the optical fiber 10 for light having a wavelength of 1625 nm when the optical fiber 10 is wound around a mandrel having a diameter of 20 mm is 1.5 dB or less per turn. The bending loss of the optical fiber 10 for light having a wavelength of 1550 nm when the optical fiber 10 is wound around a mandrel having a diameter of 30 mm is 0.25 dB or less per 10 turns. The bending loss of the optical fiber 10 for light having a wavelength of 1625 nm when the optical fiber 10 is wound around a mandrel having a diameter of 30 mm is 1.0 dB or less per 10 turns. When the optical fiber 10 is wound around a mandrel having a diameter of 60 mm, the bending loss of the optical fiber 10 for light having a wavelength of 1625 nm is 0.1 dB or less per 100 turns. The bending loss of the optical fiber 10 for light having a wavelength of 1625 nm when the optical fiber 10 is wound around a mandrel having a diameter of 100 mm is 1.0 $\times$ 10$^{-5}$ dB or less per turn.

The bending loss characteristics described above can be realized by setting the value (r2/r1), which is obtained by dividing the radius r2 of the inner cladding 121 by the radius r1 of the core 11, to a small value, for example, 3.8 or less. The optical fiber 10 has a mode field diameter centered at 8.9 $\mu$m and satisfies the level of bending loss specified in G.657.A1 while increasing the mode field diameter more than that of a typical optical fiber (an optical fiber in which the refractive index distribution of each of a core and a cladding has only one step). Therefore, the optical fiber 10 functions sufficiently as a single-mode fiber. The bending loss when the optical fiber 10 is wound with a diameter of 100 mm is so small that the bending loss cannot be measured. Therefore, the bending loss when the optical fiber 10 is wound with a diameter of 100 mm is calculated by measuring bending losses at several bending diameters within a range of 20 mm to 60 mm and performing extrapolation based on the dependency of the bending loss on the bending diameter.

A zero dispersion wavelength of the optical fiber 10 is 1300 nm or more and 1324 nm or less. Namely, the zero dispersion wavelength of the optical fiber 10 complies with the specifications of G.652.D and G.657.A1. Such a zero dispersion wavelength can be realized by setting the value (r2/r1), which is obtained by dividing the radius r2 of the inner cladding 121 by the radius r1 of the core 11, to 2.2 or more. A wavelength dispersion of the optical fiber 10 for light having a wavelength of 1550 nm is 13.3 ps/(nm·km) or more and 18.6 ps/(nm·km) or less. A zero dispersion slope of the optical fiber 10 is 0.073 ps/(nm$^2$·km) or more and 0.092 ps/(nm$^2$·km) or less. A bending-resistant optical fiber complying with the G.652.D and G.657.A1 standards can be obtained by setting the wavelength dispersion and the zero dispersion slope within these ranges.

A cable cut-off wavelength of the optical fiber 10 is 1260 nm or less. Namely, the cable cut-off wavelength of the optical fiber 10 complies with the specifications of G.652.D and G.657.A1.

In order to extend the transmission distance and increase the transmission capacity, the transmission loss of the optical fiber 10 for light having a wavelength of 1550 nm is 0.180 dB/km or less or 0.174 dB/km or less. In other words, an average OH mass concentration in the core 11 and the cladding 12 is so small that the transmission loss for light having a wavelength of 1550 nm is 0.180 dB/km or less, or is so small that the transmission loss is 0.174 dB/km or less. The optical fiber 10 corresponding to a low-loss grade can be provided by setting the transmission loss within this range.

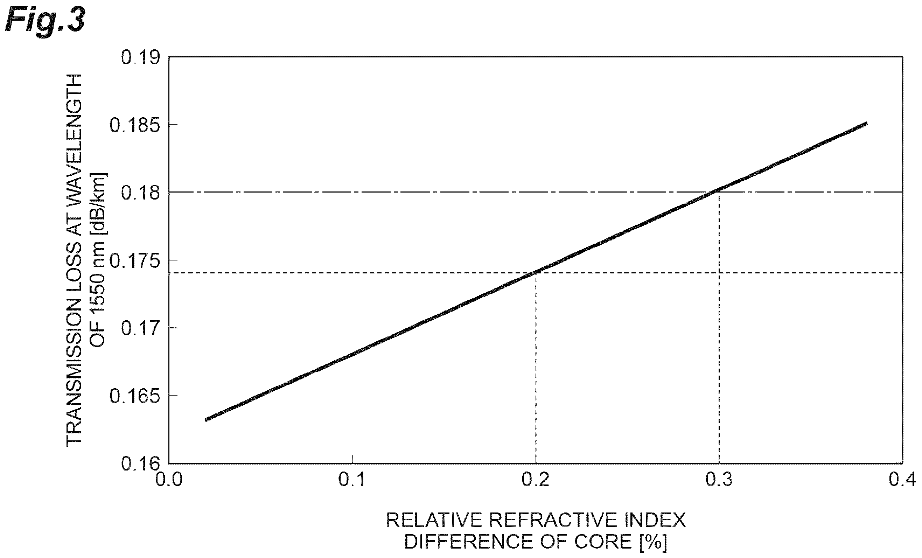

FIG. 3 is a graph showing a relationship between the relative refractive index difference $\Delta 1$ of the core 11 and a predicted transmission loss (dB/km) for light having a wavelength of 1550 nm. In FIG. 3, the horizontal axis represents the relative refractive index difference $\Delta 1$ (%) of the core 11, and the vertical axis represents the predicted loss (dB/km) at a wavelength of 1550 nm. The transmission loss shown in FIG. 3 is the sum of loss due to Rayleigh scattering, loss due to structural imperfection, and loss due to infrared absorption and ultraviolet absorption of the glass. The transmission loss shown in FIG. 3 does not include absorption loss due to OH groups and loss due to glass structural defects. As shown in FIG. 3, the transmission loss at a wavelength of 1550 nm has an approximately linear relationship with respect to the relative refractive index difference $\Delta 1$ of the core 11. Lowering the relative refractive index difference $\Delta 1$ of the core 11 means lowering the concentration of $GeO_2$. By lowering the concentration of $GeO_2$, Rayleigh scattering caused by fluctuations in the concentration of $GeO_2$ is reduced, and as a result, the transmission loss is reduced. In order to set the transmission loss at 0.180 dB/km or less, it is preferable that the relative refractive index difference $\Delta 1$ of the core 11 is 0.30% or less. In order to set the transmission loss at 0.174 dB/km or less, it is preferable that the relative refractive index difference $\Delta 1$ of the core 11 is 0.20% or less.

When the concentration of $GeO_2$ in the core 11 is too low, the viscosity of the core 11 increases, and the core 11 mainly bears the tension during drawing. As a result, tensile stress is likely to remain in the core 11. When a large tensile stress remains in the core 11 through which most of signal light is guided, the core 11 is pulled, so that glass structural defects increase, and as a result, the transmission loss increases. Therefore, in the present embodiment, the relative refractive index difference $\Delta 1$ of the core 11 is set to 0.12% or more. Since fluorine (F) serving as a dopant material acts to lower the refractive index of the core 11, by doping the core 11 with fluorine in addition to $GeO_2$, the concentration of $GeO_2$ can be increased while maintaining the relative refractive index difference $\Delta 1$ of the core 11 small, so that the viscosity of the core 11 is lowered. Therefore, the tensile stress of the core 11 can be reduced or made into compressive stress by doping the core 11 with fluorine (F). However, when the core 11 is doped with too much fluorine, the amount of $GeO_2$ doping has to be increased to maintain the relative refractive index difference $\Delta 1$, and the transmission loss attributed to Ge increases. For this reason, in the present embodiment, the relative refractive index difference of the core 11 attributed to fluorine is set to -0.12% or more and less than 0%.

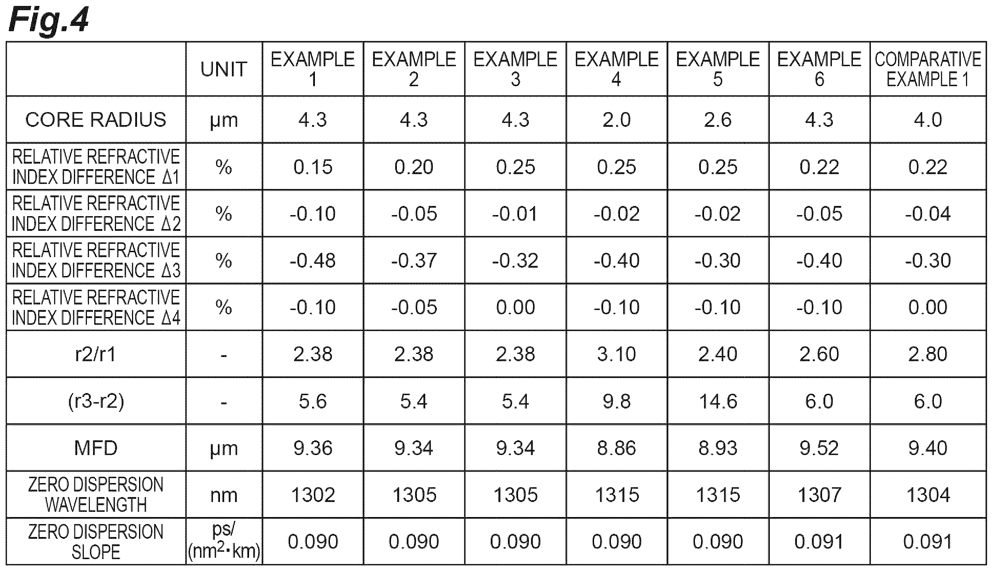

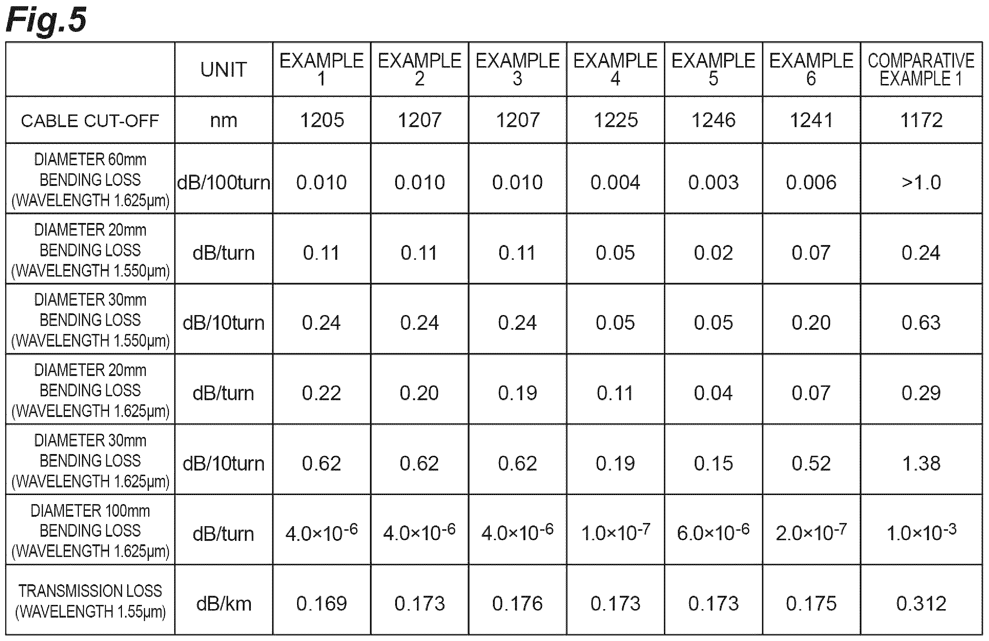

FIGS. 4 and 5 are tables showing six Examples 1 to 6 and one Comparative Example 1 of the optical fiber 10. In these figures, the structural parameters and optical characteristics of the optical fiber 10 are shown. In Examples 1 to 6 and Comparative Example 1, the relative refractive index difference $\Delta 1$ of the core 11 attributed to fluorine is -0.02%.

Referring to FIGS. 4 and 5, in Examples 1 to 6, the mode field diameter (MFD) for light having a wavelength of 1310 nm is 8.2 $\mu$m or more and 9.6 $\mu$m or less, the zero dispersion wavelength is 1300 nm or more and 1324 nm or less, the zero dispersion slope is 0.073 ps/(nm$^2$•km) or more and 0.092 ps/(nm$^2$•km) or less, and the cable cut-off wavelength is 1260 nm or less. In Examples 1 to 6, when the optical fiber 10 is wound with a diameter of 60 mm, the bending loss of the optical fiber 10 for light having a wavelength of 1625 nm is 0.1 dB or less per 100 turns. When the optical fiber 10 is wound with a diameter of 20 mm, the bending loss of the optical fiber 10 for light having a wavelength of 1550 nm is 0.75 dB or less per turn. When the optical fiber 10 is wound with a diameter of 30 mm, the bending loss of the optical fiber 10 for light having a wavelength of 1550 nm is 0.25 dB or less per 10 turns. When the optical fiber 10 is wound with a diameter of 20 mm, the bending loss of the optical fiber 10 for light having a wavelength of 1625 nm is 1.5 dB or less per turn. When the optical fiber 10 is wound with a diameter of 30 mm, the bending loss of the optical fiber 10 for light having a wavelength of 1625 nm is 1.0 dB or less per 10 turns. When the optical fiber 10 is wound with a diameter of 100 mm, the bending loss of the optical fiber 10 for light with a wavelength of 1625 nm is $1.0 \times 10^{-5}$ dB or less per turn. The transmission loss of the optical fiber 10 for light having a wavelength of 1550 nm is 0.180 dB/km or less.

In Comparative Example 1, the mode field diameter, the zero dispersion wavelength, the zero dispersion slope, the cable cut-off wavelength, and the bending loss for light having a wavelength of 1550 nm and light having a wavelength of 1625 nm when the optical fiber 10 is wound with a diameter of 20 mm are kept within the above-described ranges. However, the bending loss for light having a wavelength of 1625 nm when the optical fiber 10 is wound with a diameter of 60 mm is more than 0.1 dB per 100 turns, the bending loss for light having a wavelength of 1550 nm when the optical fiber 10 is wound with a diameter of 30 mm is more than 0.25 dB per 10 turns, and the bending loss for light having a wavelength of 1625 nm when the optical fiber 10 is wound with a diameter of 30 mm is more than 1.0 dB per 10 turns. Furthermore, the bending loss for light having a wavelength of 1625 nm when the optical fiber 10 is wound with a diameter of 100 mm is more than $1.0 \times 10^{-5}$ dB per turn, and the transmission loss for light having a wavelength of 1550 nm is more than 0.180 dB/km. It is considered that this result is due to the following. Namely, in Comparative Example 1, the difference ($\Delta 1 - \Delta 4$) between the relative refractive index difference $\Delta 1$ of the core 11 and the relative refractive index difference $\Delta 4$ of the outer cladding 123 is too small (less than 0.25% unlike Examples 1 to 6). Therefore, the bending loss when the optical fiber 10 is wound with a diameter of 100 mm increases, and the confinement of light in a fundamental mode (LP01 mode) propagating through the core 11 becomes weak. As a result, leakage losses due to fundamental mode cutoff increase at relatively long wavelengths. In Examples 1 to 6, the bending loss when the optical fiber 10 is wound with a diameter of 100 mm is suppressed to $1.0 \times 10^{-5}$ dB or less, and it is considered that leakage loss due to fundamental mode cutoff is very small.

In the optical fiber 10 of Example 6, the tensile stress of the core 11 was 30 MPa on average, and the transmission loss at a wavelength of 1550 nm was 0.175 dB/km. In contrast, in another comparative example, the tensile stress of the core 11 was 50 MPa on average, and the transmission loss at a wavelength of 1550 nm was 0.194 dB/km. In this way, when the average stress remaining in the core 11 is tensile stress, the magnitude thereof may be 30 MPa or less.

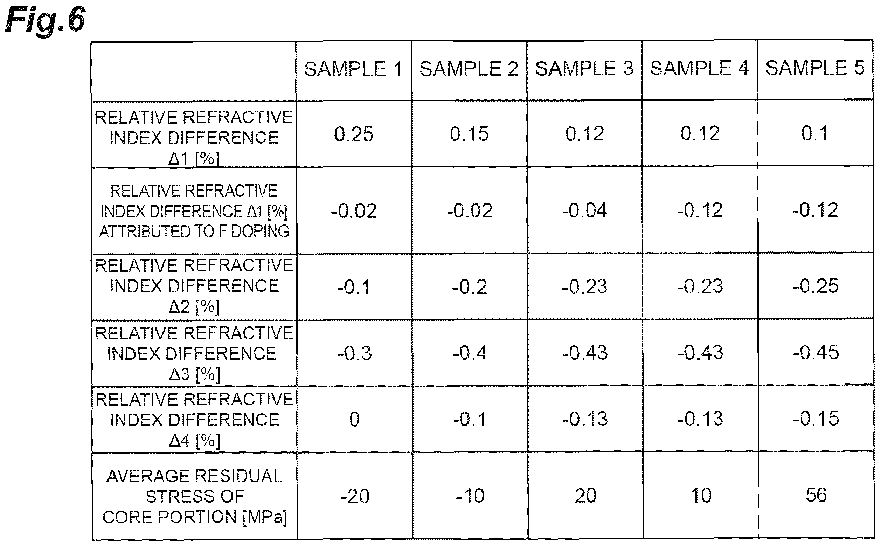

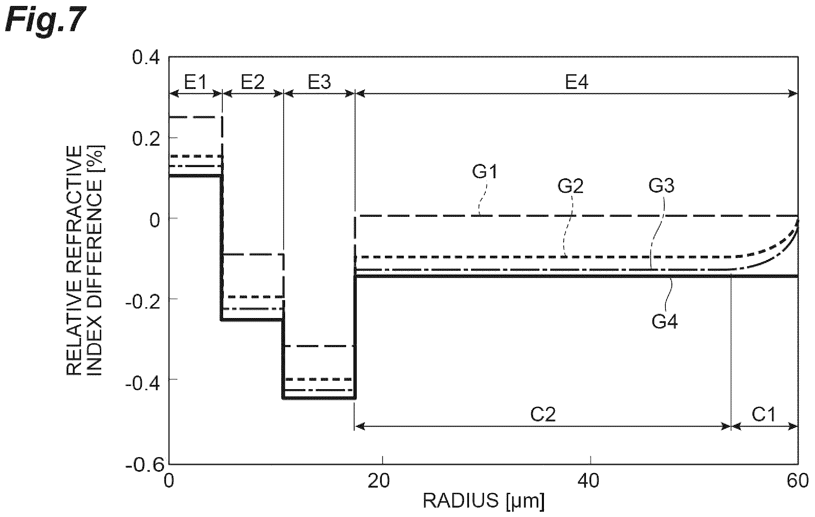

FIG. 6 is a table showing a relationship between the relative refractive index differences $\Delta 1$ to $\Delta 4$ and the average residual stress of the core 11 in five Samples 1 to 5 of the optical fiber 10. FIG. 6 also shows the value of the relative refractive index difference attributed to fluorine, which is a portion of the relative refractive index difference $\Delta 1$, in addition to the relative refractive index differences $\Delta 1$ to $\Delta 4$. Tensile stresses are shown as positive values and compressive stresses as negative values. The radius r1 of the core 11, the radius r2 of the inner cladding 121, the radius r3 of the trench 122, and the thickness of the trench 122 are equal among Samples 1 to 5. In addition, FIG. 7 is a graph showing the distribution of relative refractive index differences of Samples 1 to 5 in the radial direction. In FIG. 7, the horizontal axis represents the radial position ($\mu$m), and the vertical axis represents the relative refractive index difference (%). Line G1 corresponds to Sample 1, line G2 corresponds to Sample 2, line G3 corresponds to Samples 3 and 4, and line G4 corresponds to Sample 5. The range E1, the range E2, the range E3, and the range E4 correspond to the core 11, the inner cladding 121, the trench 122, and the outer cladding 123, respectively.

As is clear from FIG. 6, in order to prevent an average tensile stress of +30 MPa or more from remaining in the core 11, it is preferable that the relative refrac-

tive index difference $\Delta 1$ of the core 11 is 0.12% or more. In addition, the higher the fluorine concentration in the outer cladding 123 is, the lower the viscosity of the outer cladding 123 is, so that the stress applied to the core 11 during drawing increases relatively, and a large tensile stress remains in the core 11. Therefore, as shown in FIG. 7, the outer cladding 123 may be divided into a first region C1 including an outer peripheral surface and a second region C2 located inside the first region C1, and the average value of the fluorine concentration in the first region C1 may be made smaller than the average value of the fluorine concentration in the second region C2. In this case, the relative refractive index difference $\Delta 4$ of the first region C1 is larger than the relative refractive index difference $\Delta 4$ of the second region C2. In the example of FIG. 7, the fluorine concentration in the first region C1 decreases as the distance to the outer peripheral surface of the outer cladding 123 decreases. Accordingly, the relative refractive index difference $\Delta 4$ increases as the distance to the outer peripheral surface of the outer cladding 123 decreases. In this way, by reducing the fluorine concentration in the first region C1 close to the outer peripheral surface of the outer cladding 123, the viscosity in the vicinity of the outer peripheral surface of the outer cladding 123 is increased, and tensile stress is concentrated in the vicinity of the outer peripheral surface of the outer cladding 123. Therefore, the drawing tension can be borne in the vicinity of the outer peripheral surface of the outer cladding 123, and compressive stress remains in the core 11, or even when tensile stress remains in the core 11, the tensile stress can be reduced. Therefore, transmission loss can be reduced.

The optical fiber 10 of the present embodiment is manufactured, for example, as follows. First, in order to produce an optical fiber preform, a glass rod having three layers corresponding to the core 11, the inner cladding 121, and the trench 122 is prepared. Then, a glass fine particle layer covering an outer periphery of the glass rod is formed by depositing glass fine particles on the outer periphery of the glass rod while doping the glass rod with fluorine. The glass fine particle layer is a portion serving as the base of the outer cladding 123. When Samples 2 to 4 shown in FIG. 7 are produced, a process for removing some of the fluorine in the vicinity of the outer peripheral surface (first region C1) of the glass fine particle layer is further performed. Subsequently, the glass fine particle layer is heated (baked) while causing a gas having a dehydrating effect (for example, chlorine gas ($Cl_2$)) to flow. Accordingly, the glass fine particle layer is dehydrated. Thereafter, the glass rod and the glass fine particle layer are simultaneously heated to sinter the glass fine particle layer. The glass rod and the glass fine particle layer are simultaneously heated by simultaneously placing the glass rod and the glass fine particle layer in a heating furnace. The heating is performed, for example, in a reduced-pressure atmosphere. The reduced-pressure atmosphere means an atmosphere with a pressure lower than 1 atmosphere. The glass rod and the glass fine particle layer are heated, for example, at a temperature of 1300°C or more and 1600°C or less. In one embodiment, the glass rod and the glass fine particle layer are heated at a temperature of 1400°C. The outer cladding 123 is formed by sintering the glass fine particle layer.

Effects obtained by the optical fiber 10 of the present embodiment described above will be described. As described above, the optical fiber 10 of the present embodiment includes the glass fiber 13 including the core 11 and the cladding 12. The cladding 12 includes the inner cladding 121 surrounding the core 11, the trench 122 surrounding the inner cladding 121, and the outer cladding 123 surrounding the trench 122. The average value $n_{1ave}$ of the refractive index of the core 11 is larger than the average value $n_{2ave}$ of the refractive index of the inner cladding 121 and the minimum value $n_{4min}$ of the refractive index of the outer cladding 123. The average value $n_{3ave}$ of the refractive index of the trench 122 is smaller than the average value $n_{2ave}$ of the refractive index of the inner cladding 121 and the minimum value $n_{4min}$ of the refractive index of the outer cladding 123. The core 11 contains $GeO_2$. The relative refractive index difference $\Delta 1$ of the core 11 is 0.12% or more and 0.30% or less. The value obtained by subtracting the relative refractive index difference $\Delta 4$ of the outer cladding 123 from the relative refractive index difference $\Delta 1$ of the core 11 is 0.25% or more. The radius r1 of the core 11 is, for example, 4.0 $\mu$m or more and 9.2 $\mu$m or less. The mode field diameter of the optical fiber 10 for light having a wavelength of 1310 nm is 8.2 $\mu$m or more and 9.6 $\mu$m or less. A zero dispersion wavelength of the optical fiber 10 is 1300 nm or more and 1324 nm or less. A zero dispersion slope of the optical fiber 10 is 0.073 ps/(nm$^2$•km) or more and 0.092 ps/(nm$^2$•km) or less. The cable cut-off wavelength of the optical fiber 10 is 1260 nm or less. When the optical fiber 10 is wound around a mandrel having a diameter of 60 mm, the bending loss of the optical fiber 10 for light having a wavelength of 1625 nm is 0.1 dB or less per 100 turns. According to the optical fiber 10 having these parameters, the relative refractive index difference $\Delta 1$ of the core 11 doped with $GeO_2$ can be kept within an appropriate range, and bending loss and transmission loss can be reduced to a level that complies with G.652.D.

As in the present embodiment, the relative refractive index difference $\Delta 2$ of the inner cladding 121 may be -0.12% or more and 0.10% or less. Furthermore, the relative refractive index difference $\Delta 3$ of the trench 122 may be -0.70% or more and -0.20% or less. Furthermore, the ratio (r2/r1) of the radius r2 of the inner cladding 121 to the radius r1 of the core 11 may be 2.2 or more and 3.8 or less, and the difference (r3 - r2) between the radius r3 of the trench 122 and the radius r2 of the inner cladding 121 may be 4 $\mu$m or more and 15 $\mu$m or less. In this case, the optical fiber can have a refractive index distribution structure to comply with G.652.D.

As in the present embodiment, the bending loss of the optical fiber 10 for light having a wavelength of 1550 nm when the optical fiber 10 is wound around a mandrel having a diameter of 20 mm may be 0.75 dB or less per turn. Furthermore, the bending loss of the optical fiber 10 for light having a wavelength of 1625 nm when the optical fiber 10 is wound around a mandrel having a diameter of 20 mm may be 1.5 dB or less per turn. Furthermore, the bending loss of the optical fiber 10 for light having a wavelength of 1550 nm when the optical fiber 10 is wound around a mandrel having a diameter of 30 mm may be 0.25 dB or less per 10 turns. Furthermore, the bending loss of optical fiber 10 for light having a wavelength of 1625 nm when the optical fiber 10 is wound around a mandrel having a diameter of 30 mm may be 1.0 dB or less per 10 turns. In this case, the optical fiber 10 can comply with G.652.D and G.657.A1 that is a standard related to bending loss.

As described above, the outer cladding 123 may made of only pure silica glass. In this case, since tensile stress is concentrated in the outer cladding 123, tensile stress is suppressed from remaining in the core 11, and transmission loss can be reduced. Alternatively, the outer cladding 123 may contain fluorine. In this case, since the refractive index difference between the core 11 and the outer cladding 123 becomes large, even when the relative refractive index difference $\Delta 1$ of the core 11 is made small, fundamental mode cutoff is less likely to occur. Incidentally, the pure silica glass in the present disclosure is silica glass that is not intentionally doped with a dopant, and also contains silica glass containing a trace amount of impurities.

As described above, the average stress remaining in the core 11 may be a compressive stress, or a tensile stress of 30 MPa or less. In this case, since glass structural defects occurring in the core 11 due to excessive tensile stress can be reduced, an increase in transmission loss due to glass structural defects can be reduced.

As described above, the core 11 may not substantially contain alkali elements. In this case, the manufacturing cost of the optical fiber 10 can be reduced.

As in the present embodiment, the bending loss of the optical fiber 10 for light having a wavelength of 1625 nm when the optical fiber 10 is wound around a mandrel having a diameter of 100 mm may be $1.0 \times 10^{-5}$ dB or less per turn. In this case, leakage loss due to the fundamental mode cutoff can be reduced. When it is difficult to actually measure the bending loss, the bending loss may be obtained by performing extrapolation based on the dependency of the bending loss on the bending radius.

As in the present embodiment, the core 11 may further contain fluorine. Furthermore, the relative refractive index difference $\Delta 1$ attributed to fluorine in the core 11 may be -0.12% or more and less than 0%. In this case, the core 11 is co-doped with $GeO_2$ and fluorine. Accordingly, as compared to when no fluorine is contained, even when the relative refractive index difference $\Delta 1$ of the core 11 is the same, the viscosity of the core 11 can be lowered. Therefore, the residual stress in the core 11 can be easily made into compressive stress. In addition, an increase in transmission loss attributed to fluorine can be suppressed by setting the fluorine concentration in the core 11 not to be too high.

**Reference Signs List**

10: optical fiber, 11: core, 12: cladding, 13: glass fiber, 14: primary resin layer, 15: secondary resin layer, 16: resin layer, 121: inner cladding, 122: trench, 123: outer cladding, C1: first region, C2: second region, D1: diameter, D2: outer diameter, E1, E2, E3, E4: range, G1, G2, G3, G4: line, r1, r2, r3, r4: radius, Δ1, Δ2, Δ3, Δ4: relative refractive index difference.

**Claims**

1. An optical fiber, comprising:

    a glass fiber including a core and a cladding, wherein the cladding includes an inner cladding surrounding the core, a trench surrounding the inner cladding, and an outer cladding surrounding the trench,
    an average value of a refractive index of the core is larger than an average value of a refractive index of the inner cladding and a minimum value of a refractive index of the outer cladding,
    an average value of a refractive index of the trench is smaller than the average value of the refractive index of the inner cladding and the minimum value of the refractive index of the outer cladding,
    the core contains germanium dioxide,
    a relative refractive index difference of the core with respect to a refractive index of pure silica glass is 0.12% or more and 0.30% or less,
    a value obtained by subtracting a relative refractive index difference of the outer cladding with respect to the refractive index of pure silica glass from the relative refractive index difference of the core is 0.25% or more,
    a diameter of the core is 4.0 $\mu$m or more and 9.2 $\mu$m or less,
    a mode field diameter for light having a wavelength of 1310 nm is 8.2 $\mu$m or more and 9.6 $\mu$m or less,
    a zero dispersion wavelength is 1300 nm or more and 1324 nm or less,
    a zero dispersion slope is 0.073 ps/(nm$^2$•km) or more and 0.092 ps/(nm$^2$•km) or less,
    a cable cut-off wavelength is 1260 nm or less, and
    a bending loss for light having a wavelength of 1625 nm when the optical fiber is wound around a mandrel having a diameter of 60 mm is 0.1 dB or less per 100 turns.

2. The optical fiber according to claim 1,

    wherein a relative refractive index difference of the inner cladding with respect to the refractive index of pure silica glass is -0.12% or more and 0.10% or less,
    a relative refractive index difference of the trench with respect to the refractive index of pure silica glass is -0.70% or more and -0.20% or less, and
    when a radius of an outer circumferential circle of the core is r1, a radius of an outer circumferential circle of the inner cladding is r2, and a radius of an outer circumferential circle of the trench is r3, r2/r1 is 2.2 or more and 3.8 or less, and r3 - r2 is 4 $\mu$m or more and 15 $\mu$m or less.

3. The optical fiber according to claim 1 or 2,

    wherein a bending loss for light having a wavelength of 1550 nm when the optical fiber is wound around a mandrel having a diameter of 20 mm is 0.75 dB or less per turn,
    a bending loss for light having a wavelength of 1625 nm when the optical fiber is wound around a mandrel having a diameter of 20 mm is 1.5 dB or less per turn,
    a bending loss for light having a wavelength of 1550 nm when the optical fiber is wound around a mandrel having a diameter of 30 mm is 0.25 dB or less per 10 turns, and
    a bending loss for light having a wavelength of 1625 nm when the optical fiber is wound around a mandrel having a diameter of 30 mm is 1.0 dB or less per 10 turns.

4. The optical fiber according to any one of claims 1 to 3, wherein the outer cladding is made of only pure silica glass.

5. The optical fiber according to any one of claims 1 to 3, wherein the outer cladding contains fluorine.

6. The optical fiber according to claim 5, wherein in a fluorine concentration distribution in the outer cladding, when the outer cladding is divided into a first region including an outer peripheral surface of the outer cladding and a second region located inside the first region, an average value of a fluorine concentration in the first region is smaller than an average value of a fluorine concentration in the second region.

7. The optical fiber according to any one of claims 1 to 6, wherein an average stress remaining in the core is a compressive stress, or a tensile stress of 30 MPa or less.

8. The optical fiber according to any one of claims 1 to 7, wherein the core substantially does not contain an alkali element.

9. The optical fiber according to any one of claims 1 to 8, wherein a bending loss for light having a wavelength of 1625 nm when the optical fiber is wound around a mandrel having a diameter of 100 mm is $1.0 \times 10^{-5}$ dB or less per turn.

10. The optical fiber according to any one of claims 1 to 9,

   wherein the core contains fluorine, and
   a relative refractive index difference attributed to fluorine in the core with respect to a refractive index of pure silica glass is -0.12% or more and less than 0%.

# *Fig.1*

# Fig.2

RELATIVE REFRACTIVE INDEX DIFFERENCE [%]

Δ1

Δ2

Δ4

E1 E2 E3 E4

Δ3

r1

r2

r3

r4

RADIUS [μm]

EP 4 582 841 A1

*Fig.3*

## Fig.4

| | UNIT | EXAMPLE 1 | EXAMPLE 2 | EXAMPLE 3 | EXAMPLE 4 | EXAMPLE 5 | EXAMPLE 6 | COMPARATIVE EXAMPLE 1 |
|---|---|---|---|---|---|---|---|---|
| CORE RADIUS | μm | 4.3 | 4.3 | 4.3 | 2.0 | 2.6 | 4.3 | 4.0 |
| RELATIVE REFRACTIVE INDEX DIFFERENCE Δ1 | % | 0.15 | 0.20 | 0.25 | 0.25 | 0.25 | 0.22 | 0.22 |
| RELATIVE REFRACTIVE INDEX DIFFERENCE Δ2 | % | -0.10 | -0.05 | -0.01 | -0.02 | -0.02 | -0.05 | -0.04 |
| RELATIVE REFRACTIVE INDEX DIFFERENCE Δ3 | % | -0.48 | -0.37 | -0.32 | -0.40 | -0.30 | -0.40 | -0.30 |
| RELATIVE REFRACTIVE INDEX DIFFERENCE Δ4 | % | -0.10 | -0.05 | 0.00 | -0.10 | -0.10 | -0.10 | 0.00 |
| r2/r1 | - | 2.38 | 2.38 | 2.38 | 3.10 | 2.40 | 2.60 | 2.80 |
| (r3-r2) | - | 5.6 | 5.4 | 5.4 | 9.8 | 14.6 | 6.0 | 6.0 |
| MFD | μm | 9.36 | 9.34 | 9.34 | 8.86 | 8.93 | 9.52 | 9.40 |
| ZERO DISPERSION WAVELENGTH | nm | 1302 | 1305 | 1305 | 1315 | 1315 | 1307 | 1304 |
| ZERO DISPERSION SLOPE | ps/ (nm$^2$·km) | 0.090 | 0.090 | 0.090 | 0.090 | 0.090 | 0.091 | 0.091 |

# Fig.5

| | UNIT | EXAMPLE 1 | EXAMPLE 2 | EXAMPLE 3 | EXAMPLE 4 | EXAMPLE 5 | EXAMPLE 6 | COMPARATIVE EXAMPLE 1 |
|---|---|---|---|---|---|---|---|---|
| CABLE CUT-OFF | nm | 1205 | 1207 | 1207 | 1225 | 1246 | 1241 | 1172 |
| DIAMETER 60mm BENDING LOSS (WAVELENGTH 1.625μm) | dB/100turn | 0.010 | 0.010 | 0.010 | 0.004 | 0.003 | 0.006 | >1.0 |
| DIAMETER 20mm BENDING LOSS (WAVELENGTH 1.550μm) | dB/turn | 0.11 | 0.11 | 0.11 | 0.05 | 0.02 | 0.07 | 0.24 |
| DIAMETER 30mm BENDING LOSS (WAVELENGTH 1.550μm) | dB/10turn | 0.24 | 0.24 | 0.24 | 0.05 | 0.05 | 0.20 | 0.63 |
| DIAMETER 20mm BENDING LOSS (WAVELENGTH 1.625μm) | dB/turn | 0.22 | 0.20 | 0.19 | 0.11 | 0.04 | 0.07 | 0.29 |
| DIAMETER 30mm BENDING LOSS (WAVELENGTH 1.625μm) | dB/10turn | 0.62 | 0.62 | 0.62 | 0.19 | 0.15 | 0.52 | 1.38 |
| DIAMETER 100mm BENDING LOSS (WAVELENGTH 1.625μm) | dB/turn | $4.0 \times 10^{-6}$ | $4.0 \times 10^{-6}$ | $4.0 \times 10^{-6}$ | $1.0 \times 10^{-7}$ | $6.0 \times 10^{-6}$ | $2.0 \times 10^{-7}$ | $1.0 \times 10^{-3}$ |
| TRANSMISSION LOSS (WAVELENGTH 1.55μm) | dB/km | 0.169 | 0.173 | 0.176 | 0.173 | 0.173 | 0.175 | 0.312 |

EP 4 582 841 A1

**Fig.6**

| | SAMPLE 1 | SAMPLE 2 | SAMPLE 3 | SAMPLE 4 | SAMPLE 5 |
|---|---|---|---|---|---|
| RELATIVE REFRACTIVE INDEX DIFFERENCE Δ1 [%] | 0.25 | 0.15 | 0.12 | 0.12 | 0.1 |
| RELATIVE REFRACTIVE INDEX DIFFERENCE Δ1 [%] ATTRIBUTED TO F DOPING | -0.02 | -0.02 | -0.04 | -0.12 | -0.12 |
| RELATIVE REFRACTIVE INDEX DIFFERENCE Δ2 [%] | -0.1 | -0.2 | -0.23 | -0.23 | -0.25 |
| RELATIVE REFRACTIVE INDEX DIFFERENCE Δ3 [%] | -0.3 | -0.4 | -0.43 | -0.43 | -0.45 |
| RELATIVE REFRACTIVE INDEX DIFFERENCE Δ4 [%] | 0 | -0.1 | -0.13 | -0.13 | -0.15 |
| AVERAGE RESIDUAL STRESS OF CORE PORTION [MPa] | -20 | -10 | 20 | 10 | 56 |

Fig.7

## INTERNATIONAL SEARCH REPORT

| International application No. |
| --- |
| **PCT/JP2023/026794** |

| A. | CLASSIFICATION OF SUBJECT MATTER |
| --- | --- |

*G02B 6/036*(2006.01)i
FI:   G02B6/036

According to International Patent Classification (IPC) or to both national classification and IPC

| B. | FIELDS SEARCHED |
| --- | --- |

Minimum documentation searched (classification system followed by classification symbols)

G02B6/02-6/036

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2019/0361170 A1 (CORNING INCORPORATED) 28 November 2019 (2019-11-28) paragraphs [0041]-[0068], fig. 1-2 | 1-4, 8-9 |
| Y | | 5-7, 10 |
| X | US 7680381 B1 (CORNING INCORPORATED) 16 March 2010 (2010-03-16) column 3, line 35 to column 9, line 33, table 1, fig. 1-5 | 1, 3, 8-9 |
| Y | | 5-7, 10 |
| Y | WO 2020/013297 A1 (SUMITOMO ELECTRIC INDUSTRIES) 16 January 2020 (2020-01-16) paragraphs [0018]-[0050], fig. 1-2 | 5-7, 10 |
| Y | JP 2002-148466 A (SUMITOMO ELECTRIC INDUSTRIES) 22 May 2002 (2002-05-22) paragraphs [0070]-[0116], fig. 1-6 | 5-7 |
| Y | JP 2002-148465 A (SUMITOMO ELECTRIC INDUSTRIES) 22 May 2002 (2002-05-22) paragraphs [0044]-[0078], fig. 1-2 | 5-7 |

| ✔ Further documents are listed in the continuation of Box C. | ✔ See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **25 September 2023** | **10 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2023/026794**

**C.    DOCUMENTS CONSIDERED TO BE RELEVANT**

| Category* | Citation of document, with indication, where appropriate, of the relevant passages | Relevant to claim No. |
|---|---|---|
| A | US 2022/0137289 A1 (CORNING INCORPORATED) 05 May 2022 (2022-05-05)<br>entire text, all drawings | 1-10 |
| A | US 2018/0031760 A1 (CORNING INCORPORATED) 01 February 2018 (2018-02-01)<br>entire text, all drawings | 1-10 |
| A | US 2018/0299615 A1 (FIBERHOME TELECOMMUNICATION TECHNOLOGIES CO.,<br>LTD.) 18 October 2018 (2018-10-18)<br>entire text, all drawings | 1-10 |
| A | JP 2017-51053 A (DRAKA COMTEQ BV) 13 April 2017 (2017-04-13)<br>entire text, all drawings | 1-10 |
| A | WO 2004/092794 A1 (FUJIKURA LTD) 28 October 2004 (2004-10-28)<br>entire text, all drawings | 1-10 |

## INTERNATIONAL SEARCH REPORT
### Information on patent family members

| International application No. |
| --- |
| **PCT/JP2023/026794** |

| Patent document cited in search report | | | Publication date (day/month/year) | Patent family member(s) | | | Publication date (day/month/year) |
| --- | --- | --- | --- | --- | --- | --- | --- |
| US | 2019/0361170 | A1 | 28 November 2019 | WO | 2019/226477 | A1 | |
| US | 7680381 | B1 | 16 March 2010 | (Family: none) | | | |
| WO | 2020/013297 | A1 | 16 January 2020 | US | 2021/0132291 | A1 | |
| | | | | paragraphs [0032]-[0078], fig. 1-2 | | | |
| | | | | EP | 3822673 | A1 | |
| | | | | CN | 112384835 | A | |
| JP | 2002-148466 | A | 22 May 2002 | US | 2002/0044753 | A1 | |
| | | | | paragraphs [0072]-[0124], fig. 1-6 | | | |
| | | | | EP | 1191367 | A2 | |
| | | | | CA | 2355823 | A1 | |
| | | | | CN | 1343893 | A | |
| | | | | AU | 6549701 | A | |
| JP | 2002-148465 | A | 22 May 2002 | US | 2002/0031320 | A1 | |
| | | | | paragraphs [0039]-[0075], fig. 1-2 | | | |
| | | | | EP | 1191368 | A2 | |
| | | | | AU | 6550901 | A | |
| | | | | CN | 1340470 | A | |
| | | | | CA | 2355819 | A1 | |
| US | 2022/0137289 | A1 | 05 May 2022 | WO | 2022/094216 | A1 | |
| | | | | CN | 116529645 | A | |
| US | 2018/0031760 | A1 | 01 February 2018 | US | 9995873 | B2 | |
| US | 2018/0299615 | A1 | 18 October 2018 | WO | 2017/173808 | A1 | |
| | | | | EP | 3441806 | A1 | |
| | | | | CN | 105676349 | A | |
| | | | | KR | 10-2018-0102061 | A | |
| JP | 2017-510532 | A | 13 April 2017 | US | 2017/0031089 | A1 | |
| | | | | WO | 2015/092464 | A1 | |
| | | | | EP | 3084490 | A1 | |
| | | | | CN | 105899982 | A | |
| WO | 2004/092794 | A1 | 28 October 2004 | US | 2006/0039665 | A1 | |
| | | | | EP | 1657575 | A1 | |
| | | | | KR | 10-2006-0009839 | A | |
| | | | | CN | 101055330 | A | |

Form PCT/ISA/210 (patent family annex) (January 2015)

**EP 4 582 841 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022140078 A
- JP 2018511077 A

- WO 2020013297 A